# EUROPEAN PATENT APPLICATION

(11) **EP 4 514 050 A1**
(43) Date of publication of application: **26.02.2025**
(21) Application number: 22937737.9
(22) Date of filing: 18.04.2022
(51) Int. Cl.: H04W 76/00

(54) **CELL ACTIVATION METHODS AND APPARATUSES, DEVICE AND STORAGE MEDIUMS**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Stöckeler, Ferdinand
(86) International application number: PCT/CN2022/087517
(87) International publication number: WO 2023/201499

(57) **Abstract**

The present disclosure belongs to the technical field of communications. Provided in the present disclosure are cell activation methods and apparatuses, a device and storage mediums. A UE acquires information which is configured by a network device and used for mobility management, and on the basis of the information used for mobility management, configures or updates information used for cell group activation. Hence, a cell activation method provided in the present disclosure can be used for selective activation of a cell or a cell group by a UE of MR-DC, so that after the CG connected to the UE is changed, reconfiguration by a network device or configuration re-initialization of a cell to be activated is not needed, selective action of the cell or the cell group can be directly performed on the basis of the information used for cell group activation, thereby reducing signaling overhead and shortening an interruption duration of a CG change.

## Description

### TECHNICAL FIELD

The present disclosure relates to the field of communication technology, in particular to a cell activation method, an apparatus, a device, and a storage medium.

### BACKGROUND

In a communication system, by adopting a multi radio access technology (RAT) dual connectivity (MR-DC) technology, a user equipment (UE) is capable of accessing two cell groups (a master cell group (MCG) and a secondary cell group (SCG)) simultaneously, so as to increase data throughput as well as mobility of the UE.

In the related art, due to mobility enhancement at R18, selective activation of cell groups is introduced for R18. After configured grant (CG) connected to the UE changes, a configuration for a configured to-be-activated cell is still capable of being executed, and it is unnecessary for a network device to re-configure the to-be-activated cell or re-initialize the configuration of the to-be-activated cell, so it is able to reduce a signaling overhead and an interruption duration of the CG change.

Hence, there is an urgent need to provide a cell group selective activation method.

### SUMMARY

An object of the present disclosure is to provide a cell activation method, an apparatus, a device and a storage medium, so as to selectively activate a cell group.

In a first aspect, the present disclosure provides in some embodiments a cell activation method, which is performed by a UE, and includes: obtaining information for mobility management configured by a network device; and configuring or updating information for cell group activation based on the information for mobility management.

In a second aspect, the present disclosure provides in some embodiments a cell activation method for a network device, including configuring information for mobility management for the UE.

In a third aspect, the present disclosure provides in some embodiments a cell activation apparatus, including: an obtaining module configured to obtain information for mobility management configured by a network device; and a configuration and updating module configured to configure or update information for cell group activation based on the information for mobility management.

In a fourth aspect, the present disclosure provides in some embodiments a cell activation apparatus, including a configuration module configured to configure information for mobility management for the UE.

In a fifth aspect, the present disclosure provides in some embodiments a communication apparatus, including a processor and a memory storing therein a computer program. The processor is configured to execute the computer program in the memory so as to implement the cell activation method in the first aspect.

In a sixth aspect, the present disclosure provides in some embodiments a communication apparatus, including a processor and a memory storing therein a computer program. The processor is configured to execute the computer program in the memory so as to implement the cell activation method in the second aspect.

In a seventh aspect, the present disclosure provides in some embodiments a communication apparatus, including a processor and an interface circuit. The interface circuit is configured to receive a code instruction and transmit the code instruction to the processor, and the processor is configured to execute the code instruction so as to implement the cell activation method in the first aspect.

In an eighth aspect, the present disclosure provides in some embodiments a communication apparatus, including a processor and an interface circuit. The interface circuit is configured to receive a code instruction and transmit the code instruction to the processor, and the processor is configured to execute the code instruction so as to implement the cell activation method in the second aspect.

In a ninth aspect, the present disclosure provides in some embodiments a computer-readable storage medium storing therein an instruction. The instruction is executed so as to implement the cell activation method in the first aspect.

In a tenth aspect, the present disclosure provides in some embodiments a computer-readable storage medium storing therein an instruction. The instruction is executed so as to implement the cell activation method in the second aspect.

In a word, in the cell activation method, the apparatus, the device and the storage medium provided by the embodiments of the present disclosure, the UE obtains the information for mobility management configured by the network device, and configures or updates the information for cell group activation based on the information for mobility management, so that the UE subsequently selectively activates a cell group based on the information for cell group activation. Based on this, the present disclosure provides a cell activation method for selectively activating a cell or a cell group by an MR-DC UE. After CG connected to the UE changes, the UE selectively activates a cell or a cell group directly based on the above information for cell group activation, and it is unnecessary for the network device to re-configure the to-be-activated cell or re-initialize the configuration of the to-be-activated cell, so it is able to reduce a signaling overhead and an interruption duration of the CG change.

### BRIEF DESCRIPTION OF THE DRAWINGS

The above-mentioned and/or other aspects and advantages of the present disclosure may become apparent and easily understandable in the following description in conjunction with the drawings.
FIG. 1 is a flow chart of a cell activation method according to an embodiment of the present disclosure.
FIG. 2 is another flow chart of the cell activation method according to an embodiment of the present disclosure.
FIGS. 3a to 3c are flow charts of the cell activation method according to an embodiment of the present disclosure.
FIG. 4 is still yet another flow chart of the cell activation method according to an embodiment of the present disclosure.
FIG. 5 is still yet another flow chart of the cell activation method according to an embodiment of the present disclosure.
FIG. 6 is still yet another flow chart of the cell activation method according to an embodiment of the present disclosure.
FIGS. 7a to 7e are flow charts of the cell activation method according to an embodiment of the present disclosure.
FIG. 8 is a schematic view showing a cell activation apparatus according to an embodiment of the present disclosure.
FIG. 9 is another schematic view showing the cell activation apparatus according to an embodiment of the present disclosure.
FIG. 10 is a block diagram of a UE according to an embodiment of the present disclosure.
FIG. 11 is a block diagram of a network device according to an embodiment of the present disclosure.

### DETAILED DESCRIPTION

The present disclosure will be described hereinafter in details in conjunction with illustrative embodiments, and examples thereof are shown in the drawings. Unless otherwise specified, identical numerals in different drawings represent identical or similar elements. The implementations in the following description do not include all implementations consistent with the embodiments of the present disclosure, and in contrast, they are merely examples of devices and methods consistent with some aspects of the embodiments of the present disclosure as specified in the appended claims.

The terms used in embodiments of the present disclosure are for illustrative purposes only, but do not intend to limit the present disclosure. Such a singular form as "one" or "the" used in the embodiments of the present disclosure and the appended claims also intends to include a plural form, unless otherwise defined. It should be appreciated that, the expression "and/or" used in the context is meant to include any combination, or all possible combinations, of one or more associated items.

It should be appreciated that, although such expressions as "first", "second" and "third" are used to describe various information, the information are not limited by these expressions. These expressions are merely used to differentiate the information of the same type from each other. For example, without departing from the scope of the present disclosure, first information may also be called as second information, and similarly second information may also be called as first information. Depending on the context, such a word as "if" may be construed as "when ...", "in the case that ..." or "in response to determining that ...".

A cell activation method, an apparatus, a device and a storage medium provided in the embodiments of the present disclosure will be described hereinafter in details with reference to the drawings.

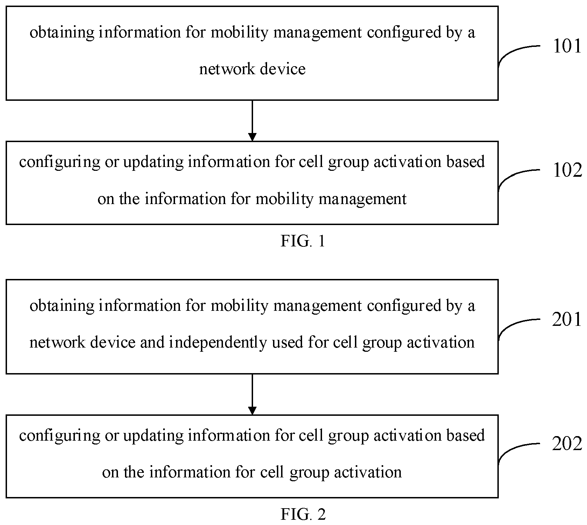

FIG. 1 is a flow chart of a cell activation method according to an embodiment of the present disclosure, and this method is performed by a UE. As shown in FIG. 1, the cell activation method includes the following steps.

Step 101: information for mobility management configured by a network device is obtained.

It should be appreciated that, in an embodiment of the present disclosure, the UE may be a device for providing voice and/or data connectivity to a user. The UE may communicate with one or more core networks via a Radio Access Network (RAN). The UE may be an Internet of Things (IoT) terminal, e.g., a sensor device or a mobile phone (also called as cellular phone), or a computer having the IoT terminal, e.g., an immobile, portable, pocket-sized, handheld, built-in or vehicle-mounted device. For example, the UE may be a Station (STA), a subscriber unit, a subscriber station, a mobile station, a mobile, a remote station, an access point, a remote terminal, an access terminal, a user terminal or a user agent. The UE may also be a device for an unmanned aerial vehicle. The terminal device may also be a vehicle-mounted device, e.g., an electronic control unit having a wireless communication function, or a wireless terminal coupled to an external electronic control unit. Alternatively, the UE may also be a roadside device, e.g., a street lamp or a signal lamp having a wireless communication function, or any other roadside devices.

In an embodiment of the present disclosure, the information for mobility management is used for at least one mobility management operation. In an embodiment of the present disclosure, the at least one mobility management operation specifically includes any one or more existing mobility management operations or mobility management operations that may possibly appear in future. For example, the mobility management operation may include cell group activation, cell group handover or conditional reconfiguration, and at this time, configuration information about the at least one mobility management operation may include information for cell group activation, information for cell group handover, or information for conditional reconfiguration. Moreover, the information for mobility management may correspond to different mobility management operations.

In an embodiment of the present disclosure, the information for mobility management includes at least one of addition information for adding a configuration item, deletion information for deleting a configuration item, modification information for modifying a configuration item, or addition/modification information for adding/modifying a configuration item.

To be specific, in an embodiment of the present disclosure, each of the addition information, the deletion information, the modification information and the addition/modification information includes at least one entry, and the entry includes at least one of a configuration identity (ID), a triggering condition of the mobility management operation, or configuration information about a cell group corresponding to the mobility management operation.

Further, in an embodiment of the present disclosure, in a case that the information for mobility management is used to configure or update the information for cell group activation, the triggering condition of the mobility management operation includes an activation condition for cell group activation and/or condition identification information corresponding to the activation condition. The configuration information about the cell group corresponding to the mobility management operation includes configuration information about a to-be-activated cell group (e.g., a handover-related configuration parameter corresponding to the to-be-activated cell group). The to-be-activated cell group includes at least one of an MCG, an SCG, or a combination of the MCG and the SCG. The MCG includes a primary cell and/or a secondary cell, and the SCG includes a primary secondary cell and/or a secondary cell.

It should be appreciated that, in an embodiment of the present disclosure, the obtaining the information for mobility management configured by the network device specifically includes obtaining the information for mobility management configured by the network device and independently used for cell group activation.

In another embodiment of the present disclosure, the obtaining the information for mobility management configured by the network device specifically includes obtaining information for at least one mobility management operation configured by the network device. To be specific, the information for at least one mobility management operation is transmitted using a message for configuring existing configuration information for mobility management. In an embodiment of the present disclosure, in a case that the information for at least one mobility management operation configured by the network device is obtained by the UE, the UE may further obtain indication information transmitted by the network device, and the indication information is specifically used to explicitly or implicitly indicate whether or not the information for mobility management is used for one or more specific mobility management operations. To be specific, the indication information is used to explicitly or implicitly indicate whether or not the information for mobility management is used for cell group activation. The contents will be described in details in the subsequent embodiments.

In addition, in an embodiment of the present disclosure, the obtaining the information for mobility management transmitted by the network device includes obtaining the information for mobility management transmitted by the network device via a broadcasting and/or a radio resource control (RRC) message. In an embodiment of the present disclosure, the obtaining the information for mobility management transmitted by the network device through the RRC message specifically includes obtaining the information for mobility management transmitted by the network device via an RRC reconfiguration message.

Step 102: information for cell group activation is configured or updated based on the information for mobility management.

In an embodiment of the present disclosure, the information for cell group activation includes at least one of the followings.

Configuration information for master cell group activation, which is used for activating a master cell group. To be specific, this configuration information is used to activate a primary cell and/or a secondary cell of the master cell group.

Configuration information for secondary cell group activation, which is used for activating a secondary cell group. To be specific, this configuration information is used to activate a primary secondary cell and/or a secondary cell of the secondary cell group.

Configuration information for master cell group activation and secondary cell group activation, which is used for activating a master cell group and a secondary cell group simultaneously. To be specific, this configuration information is used to activate at least one of a primary cell of the master cell group, a secondary cell of the master cell group, a primary secondary cell of the secondary cell group, or a secondary cell of the secondary cell group.

In an embodiment of the present disclosure, each piece of information for cell group activation includes at least one configuration item for cell group activation, and each configuration item in the at least one configuration item is used to activate one or more cell groups or one or more cells. For example, the configuration information for master cell group activation includes at least one configuration item for master cell group activation, the configuration information for secondary cell group activation includes at least one configuration item for secondary cell group activation, and the configuration information for master cell group activation and secondary cell group activation includes at least one configuration item for master cell group activation and secondary cell group activation.

The configuration item for cell group activation includes at least one of a configuration ID, an activation condition for cell group activation, condition identification information corresponding to the activation condition, or configuration information about a to-be-activated cell group.

In an embodiment of the present disclosure, in a case that the information for mobility management is configured for cell group activation, the information for cell group activation is configured or updated based on the information for mobility management. In an embodiment of the present disclosure, the configuring or updating the information for cell group activation based on the information for mobility management specifically includes at least one of the following operations.

An addition operation is performed on the information for cell group activation based on the addition information in the information for mobility management (e.g., the addition operation is performed on at least one activation configuration in the configuration information for master cell group activation, the configuration information for secondary cell group activation and the configuration information master cell group activation and secondary cell group activation based on the addition information).

A deletion operation is performed on the information for cell group activation based on the deletion information in the information for mobility management (e.g., the deletion operation is performed on at least one activation configuration in the configuration information for master cell group activation, the configuration information for secondary cell group activation and the configuration information master cell group activation and secondary cell group activation based on the deletion information).

A modification operation is performed on the information for cell group activation based on the modification information in the information for mobility management (e.g., the modification operation is performed on at least one activation configuration in the configuration information for master cell group activation, the configuration information for secondary cell group activation and the configuration information master cell group activation and secondary cell group activation based on the modification information).

An addition/modification operation is performed on the information for cell group activation based on the addition/modification information in the information for mobility management (e.g., the addition/modification operation is performed on at least one activation configuration in the configuration information for master cell group activation, the configuration information for secondary cell group activation and the configuration information master cell group activation and secondary cell group activation based on the addition/modification information).

In an embodiment of the present disclosure, the above-mentioned addition operation specifically includes adding each entry in the addition information into the information for cell group activation. To be specific, in an embodiment of the present disclosure, a to-be-selectively-activated cell group on which each entry in the addition information acts is determined based on information included in each entry in the addition information (e.g., at least one of the configuration ID, the triggering condition of the mobility management operation, or the configuration information about the cell group corresponding to the mobility management operation), and then each entry in the addition information is taken as a corresponding configuration item for cell group activation and added into the corresponding information for cell group activation.

For example, in an embodiment of the present disclosure, it is presumed that the addition information includes entry #1 to entry #3. Entry #1 is taken as a configuration item #1 and stored in the information for cell group activation, and a configuration ID of the configuration item #1 for cell group activation is just a configuration ID included in entry #1. Entry #2 is taken as a configuration item #2 and stored in the information for cell group activation, and a configuration ID of the configuration item #2 for cell group activation is just a configuration ID included in entry #2. Entry #3 is taken as a configuration item #3 and stored in the information for cell group activation, and a configuration ID of the configuration item #3 for cell group activation is just a configuration ID included in entry #3.

For example, in an embodiment of the present disclosure, it is presumed that the addition information includes entry #1 to entry #3. Based on information included in entry #1, it is determined that entry #1 is used to selectively activate a master cell group, so entry #1 is taken as a configuration item #1 for master cell group activation and stored in the information for cell group activation, and a configuration ID of the configuration item #1 for master cell group activation is just a configuration ID included in entry #1. Based on information included in entry #2, it is determined that entry #2 is used to selectively activate a secondary cell group, so entry #2 is taken as a configuration item #2 for secondary cell group activation and stored in the information for cell group activation, and a configuration ID of the configuration item #2 for secondary cell group activation is just a configuration ID included in entry #2. Based on information included in entry #3, it is determined that entry #3 is used to selectively activate the master cell group and the secondary cell group, so entry #3 is taken as a configuration item #3 for master cell group activation and secondary cell group activation and stored in the information for cell group activation, and a configuration ID of the configuration item #3 for master cell group activation and secondary cell group activation is just a configuration ID included in entry #3.

In an embodiment of the present disclosure, the above-mentioned deletion operation specifically includes deleting a configuration item for cell group activation in the information for cell group activation corresponding to a configuration ID included in each entry in the deletion information, i.e., deleting a configuration item for cell group activation whose configuration ID is identical to the configuration ID included in each entry in the deletion information.

For example, in an embodiment of the present disclosure, it is presumed that the deletion information includes entry #1, a configuration ID in entry #1 is ID #1, and the information for cell group activation includes two configuration items for cell group activation, i.e., configuration item #1 and configuration item #2. A configuration ID in configuration item #1 for cell group activation is ID #1, and a configuration ID in configuration item #2 for cell group activation is ID #2, so configuration item #1 for cell group activation may be deleted.

For example, in an embodiment of the present disclosure, it is presumed that the deletion information includes entry #1, a configuration ID in entry #1 is ID #1, and the information for cell group activation includes two configuration items for cell group activation, i.e., configuration item #1 for cell group activation used for activating a master cell group and configuration item #2 for cell group activation used for activating a secondary cell group. A configuration ID in configuration item #1 for cell group activation is ID #1, and a configuration ID in configuration item #2 for cell group activation is ID #2, so configuration item #1 for cell group activation may be deleted.

In an embodiment of the present disclosure, the modification operation specifically includes modifying a configuration item for cell group activation in the information for cell group activation corresponding to a configuration ID included in each entry in the modification information, i.e., modifying, based on each entry, a configuration item for cell group activation whose configuration ID is identical to the configuration ID in the entry. To be specific, in a case that a certain entry in the modification information includes an activation condition for cell group activation, the activation condition for cell group activation in the entry is used to replace an activation condition for cell group activation in a configuration item for cell group activation whose configuration ID is identical to the configuration ID in the entry. Alternatively, in a case that a certain entry in the modification information includes configuration information about a cell group, the configuration information about the cell group in the entry is used to replace configuration information about a cell group in a configuration item for cell group activation whose configuration ID is identical to the configuration ID in the entry.

For example, in an embodiment of the present disclosure, it is presumed that the modification information includes entry #1, a configuration ID in entry #1 is ID #1, entry #1 further includes an activation condition or cell group activation, and the information for cell group activation includes two configuration items for cell group activation, i.e., configuration item #1 for master cell group activation and configuration item #2 for secondary cell group activation. A configuration ID in configuration item #1 for master cell group activation is ID #1, and a configuration ID in configuration item #2 for secondary cell group activation is ID #2, so the activation condition for cell group activation in entry #1 is used to replace an activation condition for cell group activation in configuration item #1 for master cell group activation.

In an embodiment of the present disclosure, the addition/modification operation specifically includes: in a case that the configuration ID in the information for cell group activation corresponding to any configuration item for cell group activation is a configuration ID included in an entry in the addition/modification information, modifying the configuration item for cell group activation in the information for cell group activation corresponding to the configuration ID included in the entry in the addition/modification information based on the entry; and in a case that the configuration ID corresponding to the configuration item for cell group activation in the information for cell group activation is not a configuration ID included in an entry in the addition/modification information, adding the entry in the addition/modification information into the information for cell group activation.

For example, in an embodiment of the present disclosure, it is presumed that the addition/modification information includes entry #1 to entry #3, a configuration ID in entry #1 is ID #1, a configuration ID in entry #2 is ID #2, a configuration ID in entry #3 is ID #3, and the information for cell group activation includes two configurations items for cell group activation, i.e., configuration item #1 with a corresponding configuration ID of ID #1 and configuration item #2 with a corresponding configuration ID of ID #2. Based on this, the UE modifies configuration item #1 based on entry #1, modifies configuration item #2 based on entry #2, takes entry #3 as configuration item #3 for cell group activation and stores configuration item #3 into the information for cell group activation. A configuration ID corresponding to configuration item #3 for cell group activation is ID #3.

For example, in an embodiment of the present disclosure, it is presumed that the addition/modification information includes entry #1 to entry #3, a configuration ID in entry #1 is ID #1, a configuration ID in entry #2 is ID #2, a configuration ID in entry #3 is ID #3, and the information for cell group activation includes two configurations items for cell group activation, i.e., configuration item #1 for master cell group activation with a corresponding configuration ID of ID #1 and configuration item #2 for secondary cell group activation with a corresponding configuration ID of ID #2. Based on this, the UE modifies configuration item #1 for master cell group activation based on entry #1, and modifies configuration item #2 for secondary cell group activation based on entry #2. In addition, presuming that the UE determines, based on information included in entry #3 (e.g., at least one of a configuration ID, a triggering condition of a mobility management operation, or configuration information about a cell group corresponding to the mobility management operation), that entry #3 is used for activating a master cell group and a secondary cell group, the UE takes entry #3 as configuration item #3 for master cell group activation and secondary cell group activation and stores configuration item #3 into the information for cell group activation. A configuration ID corresponding to configuration item #3 for cell group activation is ID #3.

In a word, in the cell activation method provided by the embodiments of the present disclosure, the UE obtains the information for mobility management configured by the network device, and configures or updates the information for cell group activation based on the information for mobility management, so that the UE subsequently selectively activates a cell group based on the information for cell group activation. Based on this, the present disclosure provides a cell activation method for selectively activating a cell or a cell group by an MR-DC UE. After CG connected to the UE changes, the UE selectively activates a cell or a cell group directly based on the above information for cell group activation, and it is unnecessary for the network device to re-configure the to-be-activated cell or re-initialize the configuration of the to-be-activated cell, so it is able to reduce a signaling overhead and an interruption duration of the CG change.

FIG. 2 is a flow chart of a cell activation method according to an embodiment of the present disclosure, and this method is performed by a UE. As shown in FIG. 2, the cell activation method includes the following steps.

Step 201: information for mobility management configured by a network device and independently used for cell group activation is obtained.

Step 202: information for cell group activation is configured or updated based on the information for mobility management.

The detailed description about steps 201 and 202 may refer to that mentioned hereinabove, and thus will not be particularly defined herein.

In a word, in the cell activation method provided by the embodiments of the present disclosure, the UE obtains the information for mobility management configured by the network device, and configures or updates the information for cell group activation based on the information for mobility management, so that the UE subsequently selectively activates a cell group based on the information for cell group activation. Based on this, the present disclosure provides a cell activation method for selectively activating a cell or a cell group by an MR-DC UE. After CG connected to the UE changes, the UE selectively activates a cell or a cell group directly based on the above information for cell group activation, and it is unnecessary for the network device to re-configure the to-be-activated cell or re-initialize the configuration of the to-be-activated cell, so it is able to reduce a signaling overhead and an interruption duration of the CG change.

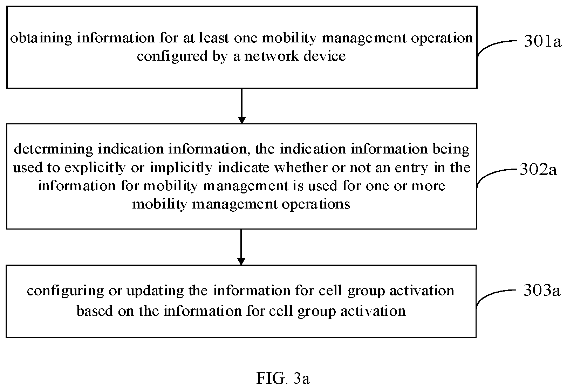

FIG. 3a is a flow chart of a cell activation method according to an embodiment of the present disclosure, and this method is performed by a UE. As shown in FIG. 3a, the cell activation method includes the following steps.

Step 301a: information for at least one mobility management operation configured by a network device is obtained.

Step 302a: determining indication information. The indication information is used to explicitly indicate whether or not the information for mobility management is used for one or more specific mobility management operations. To be specific, the indication information is used to explicitly indicate whether or not an entry in the information for mobility management is used for cell group activation.

In an embodiment of the present disclosure, the determining the indication information includes obtaining the indication information transmitted by the network device, the indication information includes a configuration ID corresponding to at least one entry in the information for mobility management, and the indication information is used to explicitly indicate whether or not the entry in the information for mobility management corresponding to the configuration ID included in the indication information is used for cell group activation. To be specific, in an embodiment of the present disclosure, the indication information is an indication code having N bits, where N is a positive integer. In a case that the indication code has a first numerical value, it is used to indicate that the entry in the information for mobility management corresponding to the configuration ID included in the indication information is used for cell group activation, and in a case that the indication code has a second numerical value, it is used to indicate that the entry in the information for mobility management corresponding to the configuration ID included in the indication information is not used for cell group activation. For example, it is presumed that the indication information is an indication code having 1 bit. In a case that the indication code has a value of "1", it is used to indicate that the entry in the information for mobility management corresponding to the configuration ID included in the indication information is capable of being used for cell group activation, and in a case that the indication code has a value of "0", it is used to indicate that the entry in the information for mobility management corresponding to the configuration ID included in the indication information is incapable of being used for cell group activation.

In another embodiment of the present disclosure, the determining the indication information includes obtaining the indication information transmitted by the network device, the indication information includes a configuration ID corresponding to at least one entry in the information for mobility management, and the indication information is used to explicitly indicate that the entry in the information for mobility management corresponding to the configuration ID included in the indication information is capable of being used for cell group activation. To be specific, in a case that the UE has received the indication information, it means that the entry corresponding to the configuration ID included in the indication information is capable of being used for cell group activation; otherwise, it means that the information for mobility management is incapable of being used for cell group activation.

It should be appreciated that, in an embodiment of the present disclosure, the indication information is individually transmitted by the network device to the UE.

In another embodiment of the present disclosure, the indication information is included in any message transmitted by the network device to the UE. For example, the indication information is included in the information for mobility management transmitted by the network device to the UE.

Based on the above, in an embodiment of the present disclosure, the determining the indication information includes obtaining the indication information included in the entry in the information for mobility management, and the indication information is used to explicitly indicate whether or not the corresponding entry is used for cell group activation.

To be specific, in an embodiment of the present disclosure, the indication information is an indication code having N bits, where N is a positive integer. In a case that the indication code has a first numerical value, it indicates that the entry including the indication information is used for cell group activation, and in a case that the indication code has a second numerical value, it indicates that the entry including the indication information is not used for cell group activation. For example, it is presumed that the indication information is an indication code having 1 bit. In a case that the indication code has a value of "1", it indicates that the entry including the indication information is used for cell group activation, and in a case that the indication code has a value of "0", it indicates that the entry included in the indication information is not used for cell group activation.

In another embodiment of the present disclosure, the determining the indication information includes obtaining the indication information in the entry in the information for mobility management, and the indication information is used to explicitly indicate that the corresponding entry is capable of being used for cell group activation. To be specific, in a case that a certain entry includes the indication information, it means that the entry is capable of being used for cell group activation; otherwise, it means that the entry is incapable of being used for cell group activation.

Step 303a: information for cell group activation is configured or updated based on the information for mobility management.

The configuring or updating the information for cell group activation based on the information for mobility management includes at least one or more of the followings.

In response to determining that the UE has received the indication information and the indication information is used to indicate that the entry in the information for mobility management corresponding to the configuration ID included in the indication information is used for cell group activation, the information for cell group activation is configured or updated based on the entry in the information for mobility management corresponding to the configuration ID included in the indication information.

In response to determining that the UE has received the indication information, the information for cell group activation is configured or updated based on the entry in the information for mobility management corresponding to the configuration ID included in the indication information.

In response to determining that the entry in the information for mobility management includes the indication information transmitted by the network device and the indication information is used to indicate that the corresponding entry is used for cell group activation, the information for cell group activation is configured or updated based on the entry in the information for mobility management including the indication information.

In response to determining that the entry in the information for mobility management includes the indication information, the information for cell group activation is configured or updated based on the entry in the information for mobility management including the indication information.

The detailed description about steps 301a to 303a may refer to that mentioned hereinabove, and thus will not be particularly defined herein.

In a word, in the cell activation method provided by the embodiments of the present disclosure, the UE obtains the information for mobility management configured by the network device, and configures or updates the information for cell group activation based on the information for mobility management, so that the UE subsequently selectively activates a cell group based on the information for cell group activation. Based on this, the present disclosure provides a cell activation method for selectively activating a cell or a cell group by an MR-DC UE. After CG connected to the UE changes, the UE selectively activates a cell or a cell group directly based on the above information for cell group activation, and it is unnecessary for the network device to re-configure the to-be-activated cell or re-initialize the configuration of the to-be-activated cell, so it is able to reduce a signaling overhead and an interruption duration of the CG change.

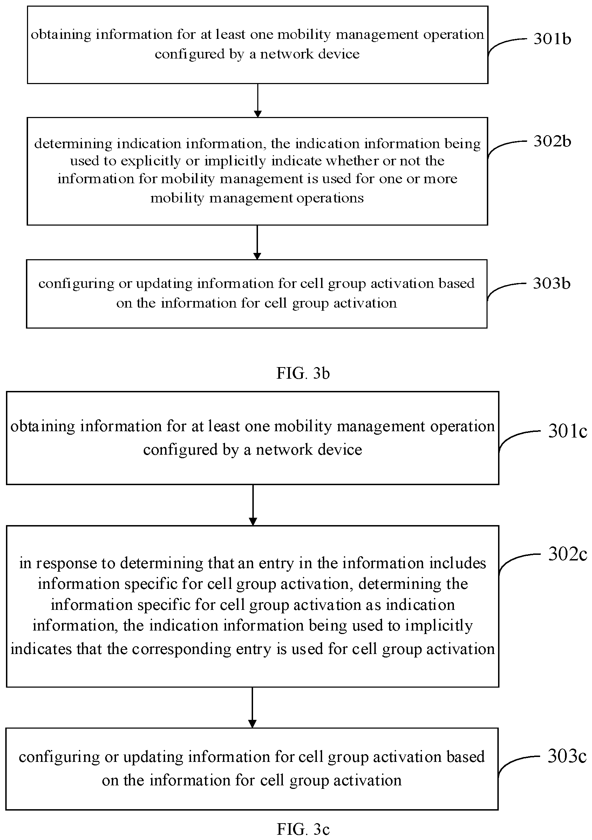

FIG. 3b is a flow chart of a cell activation method according to an embodiment of the present disclosure, and this method is performed by a UE. As shown in FIG. 3b, the cell activation method includes the following steps.

Step 301b: information for at least one mobility management operation configured by a network device is obtained.

Step 302b: indication information is determined. The indication information is used to explicitly indicate whether or not the information for mobility management is used for one or more mobility management operations in the at least one mobility management operation. To be specific, the indication information is used to explicitly indicate whether or not the information for mobility management is used for cell group activation.

In an embodiment of the present disclosure, the determining the indication information includes obtaining the indication information transmitted by the network device, and the indication information is used to explicitly indicate whether or not the information for mobility management is used for cell group activation. To be specific, in an embodiment of the present disclosure, the indication information is an indication code having M bits, where M is a positive integer. In a case that the indication code has a third numerical value, it indicates that the information for mobility management is used for cell group activation, and in a case that the indication code has a fourth numerical value, it indicates that he information for mobility management is not used for cell group activation. For example, it is presumed that the indication information is an indication code having 1 bit. In a case that the indication code has a value of "1", it indicates that the information for mobility management is used for cell group activation, and in a case that the indication code has a value of "0", it indicates that the information for mobility management is not used for cell group activation.

In another embodiment of the present disclosure, the determining the indication information includes obtaining the indication information transmitted by the network device, and the indication information is used to explicitly indicate that the information for mobility management is used for cell group activation. To be specific, in a case that the UE has received the indication information, it means that the information for mobility management is used for cell group activation; otherwise, it means that the information for mobility management is not used for cell group activation.

It should be appreciated that, in an embodiment of the present disclosure, the indication information is individually transmitted by the network device to the UE.

In another embodiment of the present disclosure, the indication information is included in any message transmitted by the network device to the UE. For example, the indication information is included in the information for mobility management transmitted by the network device to the UE. Based on the above, in an embodiment of the present disclosure, the determining the indication information includes obtaining the indication information included in the information for mobility management, and the indication information is used to explicitly indicate whether or not the corresponding information for mobility management is used for cell group activation. In another embodiment of the present disclosure, the determining the indication information includes obtaining the indication information included in the information for mobility management, and the indication information is used to explicitly indicate that the corresponding information for mobility management is capable of being used for cell group activation.

Step 303b: information for cell group activation is configured or updated based on the information for mobility management.

The configuring or updating the information for cell group activation based on the information for mobility management includes the following methods.

In response to determining that the UE has received the indication information and the indication information is used to indicate that the information for mobility management is used for cell group activation, the information for cell group activation is configured or updated based on each entry in the information for mobility management.

In response to determining that the UE has received the indication information, the information for cell group activation is configured or updated based on each entry in the information for mobility management.

In response to determining that the information for mobility management includes the indication information transmitted by the network device and the indication information is used to indicate that the corresponding information for mobility management is used for cell group activation, the information for cell group activation is configured or updated based on each entry in the information for mobility management.

In response to determining that the information for mobility management includes the indication information, the information for cell group activation is configured or updated based on each entry in the information for mobility management.

The detailed description about steps 301b to 303b may refer to that mentioned hereinabove, and thus will not be particularly defined herein.

In a word, in the cell activation method provided by the embodiments of the present disclosure, the UE obtains the information for mobility management configured by the network device, and configures or updates the information for cell group activation based on the information for mobility management, so that the UE subsequently selectively activates a cell group based on the information for cell group activation. Based on this, the present disclosure provides a cell activation method for selectively activating a cell or a cell group by an MR-DC UE. After CG connected to the UE changes, the UE selectively activates a cell or a cell group directly based on the above information for cell group activation, and it is unnecessary for the network device to re-configure the to-be-activated cell or re-initialize the configuration of the to-be-activated cell, so it is able to reduce a signaling overhead and an interruption duration of the CG change.

FIG. 3c is a flow chart of a cell activation method according to an embodiment of the present disclosure, and thus method is performed by a UE. As shown in FIG. 3c, the cell activation method includes the following steps.

Step 301c: information for at least one mobility management operation configured by a network device is obtained.

Step 302c: in response to determining that information included in an entry in information for mobility management includes information specific for cell group activation, determining the information specific for cell group activation as indication information. The indication information is used to implicitly indicate that the corresponding entry is used for cell group activation.

It should be appreciated that, in an embodiment of the present disclosure, the information specific for cell group activation may be understood as information which is required merely in a case that a cell group is to be activated. Hence, in a case that the information for mobility management includes the information specific for cell group activation, it may be deemed that the information for mobility management is used for cell group activation.

For example, in an embodiment of the present disclosure, presuming that configuration information about a cell group included in a certain entry in the information for mobility management is the information specific for cell group activation, the configuration information about the cell group in the entry may be determined as the indication information. In another embodiment of the present disclosure, presuming that a triggering condition of a mobility management operation included in a certain entry in the information for mobility management is the information specific cell group activation, the triggering condition of the mobility management operation in the entry may be determined as the indication information.

Step 303c: information for cell group activation is configured or updated based on information for mobility management.

The detailed description about steps 301b and 303b may refer to that mentioned hereinabove, and thus will not be particularly defined herein.

In a word, in the cell activation method provided by the embodiments of the present disclosure, the UE obtains the information for mobility management configured by the network device, and configures or updates the information for cell group activation based on the information for mobility management, so that the UE subsequently selectively activates a cell group based on the information for cell group activation. Based on this, the present disclosure provides a cell activation method for selectively activating a cell or a cell group by an MR-DC UE. After CG connected to the UE changes, the UE selectively activates a cell or a cell group directly based on the above information for cell group activation, and it is unnecessary for the network device to re-configure the to-be-activated cell or re-initialize the configuration of the to-be-activated cell, so it is able to reduce a signaling overhead and an interruption duration of the CG change.

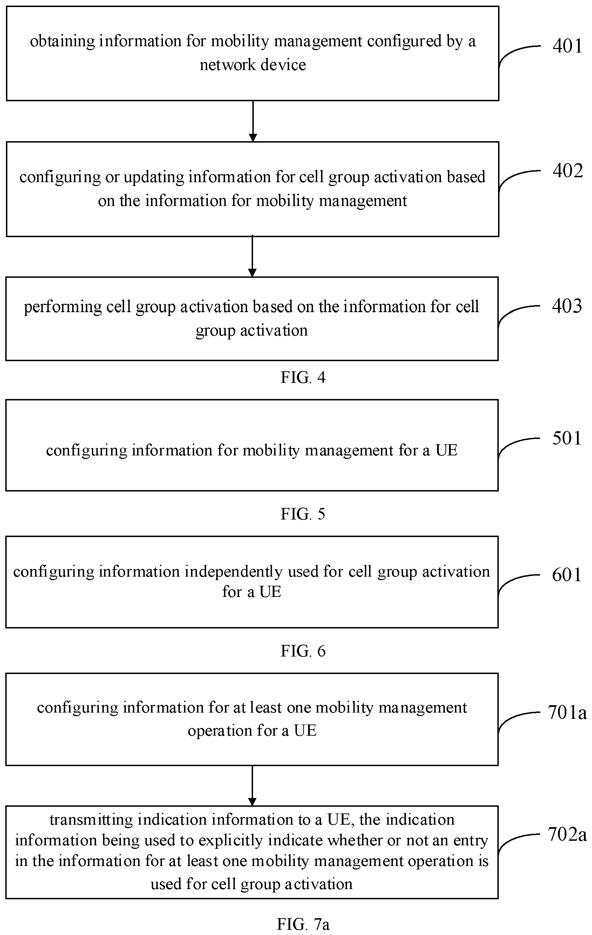

FIG. 4 is a flow chart of a cell activation method according to an embodiment of the present disclosure, and this method is performed by a UE. As shown in FIG. 4, and the cell activation method includes the following steps.

Step 401: information for mobility management configured by a network device is obtained.

Step 402: information for cell group activation is configured or updated based on the information for mobility management.

The detailed description about steps 401 and 402 may refer to that mentioned hereinabove, and thus will not be particularly defined herein.

Step 403: cell group activation is performed based on the information for cell group activation.

In an embodiment of the present disclosure, the performing the cell group activation based on the information for cell group activation includes: determining whether or not a corresponding cell group meets an activation condition based on the information for cell group activation; and in response to determining that the corresponding cell group meets the activation condition, activating the corresponding cell group.

It should be appreciated that, in an embodiment of the present disclosure, a cell corresponding to the cell group may also be activated. To be specific, a primary cell of a master cell group or a primary secondary cell of a secondary cell group may be activated.

In an embodiment of the present disclosure, the activating the cell group or the cell specifically includes accessing the cell group or the cell. For example, downlink synchronization is performed with the cell group or the cell, and/or a random access procedure is initiated in the cell group or cell.

In an embodiment of the present disclosure, in a case that the UE determines that a plurality of cell groups or cells meets the activation condition simultaneously, one or more cell groups to be connected to the UE may be determined based on UE implementation, or one or more cells to be connected to the UE may be determined based on UE implementation.

In a word, in the cell activation method provided by the embodiments of the present disclosure, the UE obtains the information for mobility management configured by the network device, and configures or updates the information for cell group activation based on the information for mobility management, so that the UE subsequently selectively activates a cell group based on the information for cell group activation. Based on this, the present disclosure provides a cell activation method for selectively activating a cell or a cell group by an MR-DC UE. After CG connected to the UE changes, the UE selectively activates a cell or a cell group directly based on the above information for cell group activation, and it is unnecessary for the network device to re-configure the to-be-activated cell or re-initialize the configuration of the to-be-activated cell, so it is able to reduce a signaling overhead and an interruption duration of the CG change.

FIG. 5 is a flow chart of a cell activation method according to an embodiment of the present disclosure, and this method is performed by a network device. As shown in FIG. 5, the cell activation method includes the following step.

Step 501: information for mobility management is configured for a UE.

The detailed description about step 501 may refer to that mentioned hereinabove, and thus will not be particularly defined herein.

In a word, in the cell activation method provided by the embodiments of the present disclosure, the UE obtains the information for mobility management configured by the network device, and configures or updates the information for cell group activation based on the information for mobility management, so that the UE subsequently selectively activates a cell group based on the information for cell group activation. Based on this, the present disclosure provides a cell activation method for selectively activating a cell or a cell group by an MR-DC UE. After CG connected to the UE changes, the UE selectively activates a cell or a cell group directly based on the above information for cell group activation, and it is unnecessary for the network device to re-configure the to-be-activated cell or re-initialize the configuration of the to-be-activated cell, so it is able to reduce a signaling overhead and an interruption duration of the CG change.

FIG. 6 is a flow chart of a cell activation method according to an embodiment of the present disclosure, and this method is performed by a network device. As shown in FIG. 6, the cell activation method includes the following step.

Step 601: information independently used for cell group activation is configured for a UE.

The detailed description about step 601 may refer to that mentioned hereinabove, and thus will not be particularly defined herein.

In a word, in the cell activation method provided by the embodiments of the present disclosure, the UE obtains the information for mobility management configured by the network device, and configures or updates the information for cell group activation based on the information for mobility management, so that the UE subsequently selectively activates a cell group based on the information for cell group activation. Based on this, the present disclosure provides a cell activation method for selectively activating a cell or a cell group by an MR-DC UE. After CG connected to the UE changes, the UE selectively activates a cell or a cell group directly based on the above information for cell group activation, and it is unnecessary for the network device to re-configure the to-be-activated cell or re-initialize the configuration of the to-be-activated cell, so it is able to reduce a signaling overhead and an interruption duration of the CG change.

FIG. 7a is a flow chart of a cell activation method according to an embodiment of the present disclosure, and this method is performed by a network device. As shown in FIG. 7a, the cell activation method includes the following steps.

Step 701a: information for at least one mobility management operation is configured for a UE.

Step 702a: indication information is transmitted to the UE, and the indication information is used to explicitly indicate whether or not the information for mobility management is used for one or more mobility management operations in the at least one mobility management operation. To be specific, the indication information is used to explicitly indicate whether or not an entry in the information for mobility management is used for cell group activation.

The detailed description about steps 701a and 702a may refer to that mentioned hereinabove, and thus will not be particularly defined herein.

In a word, in the cell activation method provided by the embodiments of the present disclosure, the UE obtains the information for mobility management configured by the network device, and configures or updates the information for cell group activation based on the information for mobility management, so that the UE subsequently selectively activates a cell group based on the information for cell group activation. Based on this, the present disclosure provides a cell activation method for selectively activating a cell or a cell group by an MR-DC UE. After CG connected to the UE changes, the UE selectively activates a cell or a cell group directly based on the above information for cell group activation, and it is unnecessary for the network device to re-configure the to-be-activated cell or re-initialize the configuration of the to-be-activated cell, so it is able to reduce a signaling overhead and an interruption duration of the CG change.

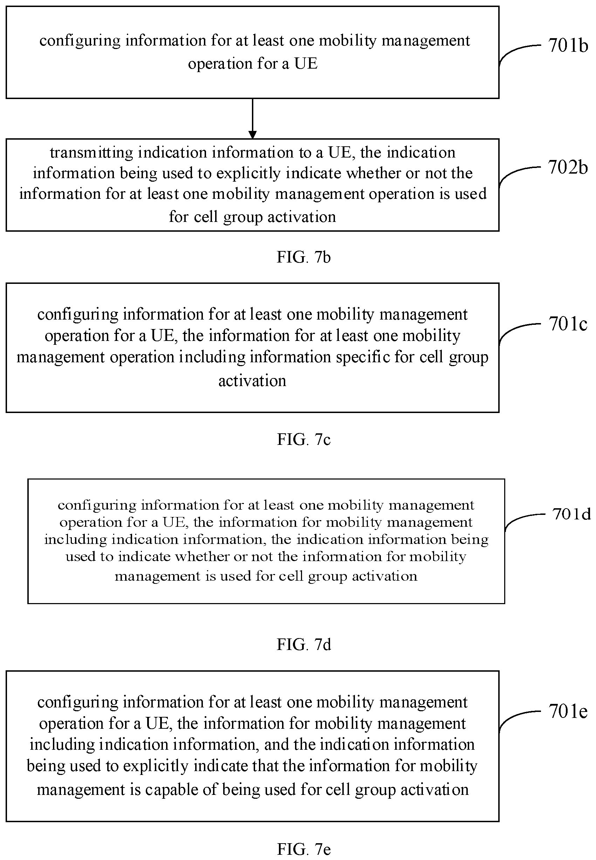

FIG. 7b is a flow chart of a cell activation method according to an embodiment of the present disclosure, and this method is performed by a network device. As shown in FIG. 7b, the cell activation method includes the following steps.

Step 701b: information for at least one mobility management operation is configured for a UE.

Step 702b: indication information is transmitted to the UE, and the indication information is used to explicitly indicate whether or not the information for mobility management is used for one or more mobility management operations in the at least one mobility management operation. To be specific, the indication information is used to explicitly indicate whether or not the information for mobility management is used for cell group activation.

The detailed description about Steps 701b and 702b may refer to that mentioned hereinabove, and thus will not be particularly defined herein.

In a word, in the cell activation method provided by the embodiments of the present disclosure, the UE obtains the information for mobility management configured by the network device, and configures or updates the information for cell group activation based on the information for mobility management, so that the UE subsequently selectively activates a cell group based on the information for cell group activation. Based on this, the present disclosure provides a cell activation method for selectively activating a cell or a cell group by an MR-DC UE. After CG connected to the UE changes, the UE selectively activates a cell or a cell group directly based on the above information for cell group activation, and it is unnecessary for the network device to re-configure the to-be-activated cell or re-initialize the configuration of the to-be-activated cell, so it is able to reduce a signaling overhead and an interruption duration of the CG change.

FIG. 7c is a flow chart of a cell activation method according to an embodiment of the present disclosure, and this method is performed by a network device. As shown in FIG. 7c, the cell activation method includes the following step.

Step 701c: information for at least one mobility management operation is configured for a UE. The information for at least one mobility management operation includes information specific for cell group activation.

The detailed description about Step 701c may refer to that mentioned hereinabove, and thus will not be particularly defined herein.

In a word, in the cell activation method provided by the embodiments of the present disclosure, the UE obtains the information for mobility management configured by the network device, and configures or updates the information for cell group activation based on the information for mobility management, so that the UE subsequently selectively activates a cell group based on the information for cell group activation. Based on this, the present disclosure provides a cell activation method for selectively activating a cell or a cell group by an MR-DC UE. After CG connected to the UE changes, the UE selectively activates a cell or a cell group directly based on the above information for cell group activation, and it is unnecessary for the network device to re-configure the to-be-activated cell or re-initialize the configuration of the to-be-activated cell, so it is able to reduce a signaling overhead and an interruption duration of the CG change.

FIG. 7d is a flow chart of a cell activation method according to an embodiment of the present disclosure, and this method is performed by a network device. As shown in FIG. 7d, the cell activation method includes the following step.

Step 701d: information for at least one mobility management operation is configured for a UE, the information for mobility management includes indication information, and the indication information is used to explicitly indicate whether or not the information for mobility management is used for one or more mobility management operations in the at least one mobility management operation. To be specific, the indication information is used to explicitly indicate whether or not the information for mobility management is used for cell group activation.

The detailed description about Step 701d may refer to that mentioned hereinabove, and thus will not be particularly defined herein.

In a word, in the cell activation method provided by the embodiments of the present disclosure, the UE obtains the information for mobility management configured by the network device, and configures or updates the information for cell group activation based on the information for mobility management, so that the UE subsequently selectively activates a cell group based on the information for cell group activation. Based on this, the present disclosure provides a cell activation method for selectively activating a cell or a cell group by an MR-DC UE. After CG connected to the UE changes, the UE selectively activates a cell or a cell group directly based on the above information for cell group activation, and it is unnecessary for the network device to re-configure the to-be-activated cell or re-initialize the configuration of the to-be-activated cell, so it is able to reduce a signaling overhead and an interruption duration of the CG change.

FIG. 7e is a flow chart of a cell activation method according to an embodiment of the present disclosure, and this method is performed by a network device. As shown in FIG. 7e, the cell activation method includes the following step.

Step 701e: information for at least one mobility management operation is configured for a UE, the information for mobility management includes indication information, and the indication information is used to explicitly indicate whether or not the information for mobility management is used for one or more mobility management operations in the at least one mobility management operation. To be specific, the indication information is used to explicitly indicate that the information for mobility management is capable of being used for cell group activation.

The detailed description about Step 701e may refer to that mentioned hereinabove, and thus will not be particularly defined herein.

In a word, in the cell activation method provided by the embodiments of the present disclosure, the UE obtains the information for mobility management configured by the network device, and configures or updates the information for cell group activation based on the information for mobility management, so that the UE subsequently selectively activates a cell group based on the information for cell group activation. Based on this, the present disclosure provides a cell activation method for selectively activating a cell or a cell group by an MR-DC UE. After CG connected to the UE changes, the UE selectively activates a cell or a cell group directly based on the above information for cell group activation, and it is unnecessary for the network device to re-configure the to-be-activated cell or re-initialize the configuration of the to-be-activated cell, so it is able to reduce a signaling overhead and an interruption duration of the CG change.

It should be appreciated that, for the embodiments as shown in FIGS. 1 to 7, these embodiments may be implemented individually, or in a combined manner (e.g., related embodiments may be implemented in a combined manner). The individual implementation and the combined implementation of the embodiments fall within the scope of the present disclosure.

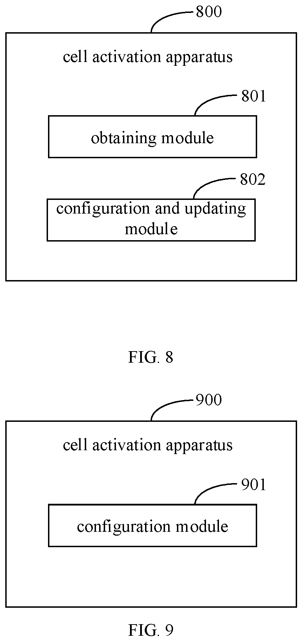

FIG. 8 is a schematic view showing a cell activation apparatus according to an embodiment of the present disclosure. As shown in FIG. 8, the cell activation apparatus includes an obtaining module 801 and a configuration and updating module 802.

The obtaining module 801 is configured to obtain information for mobility management configured by a network device.

The configuration and updating module 802 is configured to configure or update information for cell group activation based on the information for mobility management.

In a word, in the cell activation apparatus provided by the embodiments of the present disclosure, the UE obtains the information for mobility management configured by the network device, and configures or updates the information for cell group activation based on the information for mobility management, so that the UE subsequently selectively activates a cell group based on the information for cell group activation. Based on this, the present disclosure provides a cell activation method for selectively activating a cell or a cell group by an MR-DC UE. After CG connected to the UE changes, the UE selectively activates a cell or a cell group directly based on the above information for cell group activation, and it is unnecessary for the network device to re-configure the to-be-activated cell or re-initialize the configuration of the to-be-activated cell, so it is able to reduce a signaling overhead and an interruption duration of the CG change.

Optionally, in an embodiment of the present disclosure, the information for cell group activation includes at least one configuration item for cell group activation, and each configuration item in the at least one configuration item is used to activate one or more cell groups. The configuration item for cell group activation includes one or more of a configuration ID, an activation condition for cell group activation, condition identification information corresponding to the activation condition, or configuration information about a to-be-activated cell group.

Optionally, in an embodiment of the present disclosure, the information for mobility management includes at least one of addition information for adding the configuration item, deletion information for deleting the configuration item, modification information for modifying the configuration item, or addition/modification information for adding/modifying the configuration item. Each of the addition information, the deletion information, the modification information and the addition/modification information includes an entry for indicating at least one of the configuration ID, a triggering condition of a mobility management operation, or configuration information about a cell group corresponding to the mobility management operation.

Optionally, in an embodiment of the present disclosure, the obtaining module is further configured to obtain information configured by the network device and independently used for cell group activation.

Optionally, in an embodiment of the present disclosure, the obtaining module is further configured to obtain information for at least one mobility management operation configured by the network device.

Optionally, in an embodiment of the present disclosure, the cell activation apparatus is further configured to determine indication information, and the indication information is used to explicitly or implicitly indicate whether or not the entry in the information for mobility management is used for one or more mobility management operations in the at least one mobility management operation.

Optionally, in an embodiment of the present disclosure, the cell activation apparatus is further configured to determine indication information, and the indication information is used to explicitly or implicitly indicate whether or not the entry in the information for mobility management is used for cell group activation.

Optionally, in an embodiment of the present disclosure, the cell activation apparatus is further configured to: obtain indication information transmitted by the network device, the indication information including a configuration ID corresponding to at least one entry in the information for mobility management, the indication information being used to explicitly indicate whether or not the entry in the information for mobility management corresponding to the configuration ID in the indication information is used for cell group activation; and/or obtain indication information in an entry in the information for mobility management, the indication information being used to explicitly indicate whether or not the entry is used for cell group activation.

Optionally, in an embodiment of the present disclosure, the cell activation apparatus is further configured to: obtain indication information from the network device, the indication information including a configuration ID corresponding to at least one entry in the information for mobility management, the indication information being used to explicitly indicate that the entry in the information for mobility management corresponding to the configuration ID in the indication information is capable of being used for cell group activation; and/or obtain indication information in an entry in the information for mobility management, the indication information being used to explicitly indicate that the entry is capable of being used for cell group activation.

Optionally, in an embodiment of the present disclosure, the cell activation apparatus is further configured to, in response to determining that information included in the entry in the information for mobility management includes information specific for cell group activation, determine the information specific for cell group activation as the indication information, and the indication information is used to implicitly indicate that the entry is used for cell group activation.

Optionally, in an embodiment of the present disclosure, the cell activation apparatus is further configured to determine indication information, and the indication information is used to explicitly or implicitly indicate whether or not the information for mobility management is used for one or more mobility management operations in the at least one mobility management operation.

Optionally, in an embodiment of the present disclosure, the cell activation apparatus is further configured to determine indication information, and the indication information is used to explicitly or implicitly indicate whether or not the information for mobility management is used for cell group activation.

Optionally, in an embodiment of the present disclosure, the configuration and updating module is further configured to: perform an addition operation on the information for cell group activation based on the addition information; and/or perform a deletion operation on the information for cell group activation based on the deletion information; and/or perform a modification operation on the information for cell group activation based on the modification information; and/or perform an addition/modification operation on the information for cell group activation based on the addition/modification information.

Optionally, in an embodiment of the present disclosure, the information for cell group activation includes at least one of: configuration information for master cell group activation, used for activating a master cell group; configuration information for secondary cell group activation, used for activating a secondary cell group; or configuration information for master cell group activation and secondary cell group activation, used for activating the master cell group and the secondary cell group simultaneously, or activating the master cell group or the secondary cell group.

Optionally, in an embodiment of the present disclosure, the addition operation includes, in response to determining that the addition information is used for updating the information for cell group activation, adding each entry in the addition information into the information for cell group activation.

Optionally, in an embodiment of the present disclosure, the deletion operation includes, in response to determining that the deletion information is used for updating the information for cell group activation, deleting a configuration item for cell group activation in the information for cell group activation corresponding to a configuration ID included in each entry in the deletion information.

Optionally, in an embodiment of the present disclosure, the modification operation includes, in response to determining that the modification information is used for updating the information for cell group activation, modifying a configuration item for cell group activation in the information for cell group activation corresponding to a configuration ID included in each entry in the modification information.

Optionally, in an embodiment of the present disclosure, the addition/modification operation includes, in response to determining that the addition/modification information is used for updating the information for cell group activation: in a case that a configuration ID corresponding to any configuration item for cell group activation in the information for cell group activation is a configuration ID included in an entry in the addition/modification information, modifying the configuration item for cell group activation in the information for cell group activation corresponding to the configuration ID included in the entry in the addition/modification information; and in a case that the configuration ID corresponding to any configuration item for cell group activation in the information for cell group activation is not a configuration ID included in an entry in the addition/modification information, adding the entry in the addition/modification information into the information for cell group activation.

Optionally, in an embodiment of the present disclosure, the cell activation apparatus is further configured to perform cell group activation based on the information for cell group activation.

Optionally, in an embodiment of the present disclosure, the cell activation apparatus is further configured to: determine whether or not a corresponding cell group meets an activation condition based on the information for cell group activation; and in response to determining that the corresponding cell group has met the activation condition, activate the corresponding cell group.

Optionally, in an embodiment of the present disclosure, the obtaining module is further configured to obtain the information for mobility management transmitted by the network device via a broadcasting and/or an RRC message.

FIG. 9 is a schematic view showing a cell activation apparatus according to an embodiment of the present disclosure. As shown in FIG. 9, the cell activation apparatus includes a configuration module 901 configured to configure information for mobility management for a UE.

In a word, in the cell activation apparatus provided by the embodiments of the present disclosure, the UE obtains the information for mobility management configured by the network device, and configures or updates the information for cell group activation based on the information for mobility management, so that the UE subsequently selectively activates a cell group based on the information for cell group activation. Based on this, the present disclosure provides a cell activation method for selectively activating a cell or a cell group by an MR-DC UE. After CG connected to the UE changes, the UE selectively activates a cell or a cell group directly based on the above information for cell group activation, and it is unnecessary for the network device to re-configure the to-be-activated cell or re-initialize the configuration of the to-be-activated cell, so it is able to reduce a signaling overhead and an interruption duration of the CG change.

Optionally, in an embodiment of the present disclosure, the information for mobility management includes at least one of addition information for adding a configuration item, deletion information for deleting a configuration item, modification information for modifying a configuration item, or addition/modification information for adding/modifying a configuration item. Each of the addition information, the deletion information, the modification information and the addition/modification information includes an entry for indicating at least one of a configuration ID, a triggering condition of a mobility management operation, or configuration information about a cell group corresponding to the mobility management operation.

Optionally, in an embodiment of the present disclosure, the configuration module is further configured to configure information independently used for cell group activation for the UE.

Optionally, in an embodiment of the present disclosure, the configuration module is further configured to configure information for at least one mobility management operation for the UE.

Optionally, in an embodiment of the present disclosure, the cell activation apparatus is further configured to transmit indication information to the UE, and the indication information is used to explicitly or implicitly indicate whether or not the entry in the information for mobility management is used for one or more mobility management operations in the at least one mobility management operation.

Optionally, in an embodiment of the present disclosure, the cell activation apparatus is further configured to transmit indication information to the UE, and the indication information is used to explicitly or implicitly indicate whether or not the entry in the information for mobility management is used for cell group activation.

Optionally, in an embodiment of the present disclosure, the indication information includes a configuration ID corresponding to at least one entry in the information for mobility management, and the indication information is used to explicitly indicate whether or not the entry in the information for mobility management corresponding to the configuration ID in the indication information is used for cell group activation; and/or the indication information is included in an entry in the information for mobility management, and the indication information is used to explicitly indicate whether or not the entry is used for cell group activation.

Optionally, in an embodiment of the present disclosure, the indication information includes a configuration ID corresponding to at least one entry in the information for mobility management, and the indication information is used to explicitly indicate whether or not the entry in the information for mobility management corresponding to the configuration ID in the indication information is capable of being used for cell group activation; and/or the indication information is included in an entry in the information for mobility management, and the indication information is used to explicitly indicate whether or not the entry is capable of being used for cell group activation.

Optionally, in an embodiment of the present disclosure, the cell activation apparatus is further configured to transmit indication information to the UE, and the indication information is used to explicitly or implicitly indicate whether or not the information for mobility management is used for one or more mobility management operations in the at least one mobility management operation.

Optionally, in an embodiment of the present disclosure, the cell activation apparatus is further configured to transmit indication information to the UE, and the indication information is used to explicitly or implicitly indicate whether or not the information for mobility management is used for cell group activation.

Optionally, in an embodiment of the present disclosure, the information for mobility management includes information specific for cell group activation.

Optionally, in an embodiment of the present disclosure, the configuration module is further configured to transmit the information for mobility management via a broadcasting and/or an RRC message.

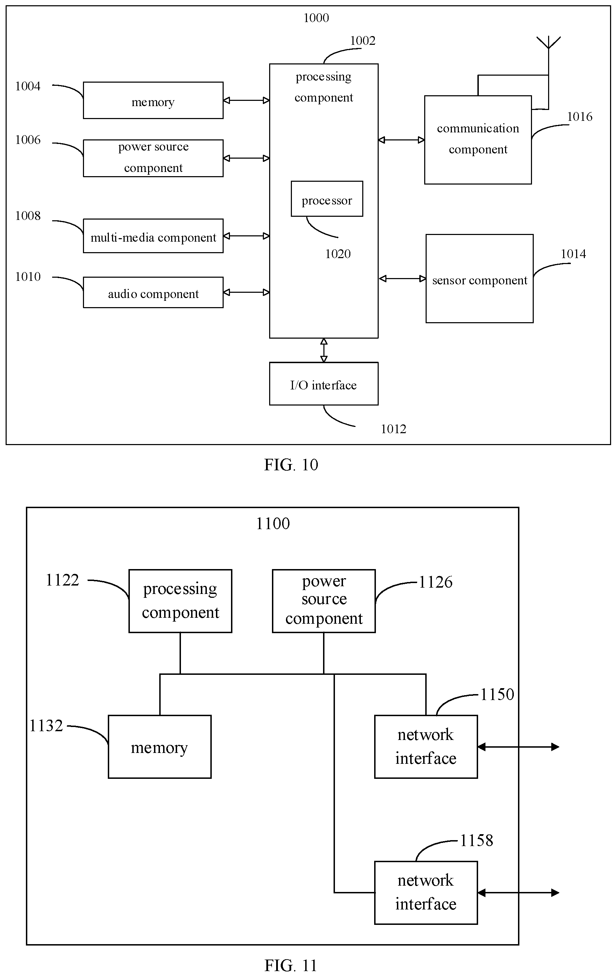

FIG. 10 is a block diagram of a UE 1000 according to an embodiment of the present disclosure. For example, the UE 1000 is a mobile phone, a computer, a digital broadcasting terminal device, a message transceiver device, a game console, a flat-panel device, medical equipment, fitness equipment, or a personal digital assistant.

As shown in FIG. 10, the UE 1000 includes at least one component selected from the group consisting of a processing component 1002, a memory 1004, a power source component 1006, a multi-media component 1008, an audio component 1010, an input/output (I/O) interface 1012, a sensor component 1013, and a communication component 1016.

Generally, the processing component 1002 controls an entire operation of the UE 1000, e.g., operations associated with display, phone call, data communication, camera operation and recording operation. The processing component 1002 includes at least one processor 1020 to execute an instruction, so as to implement all of, or a part of, the steps of the above-mentioned method. In addition, the processing component 1002 includes at least one module for the interaction between the processing component 1002 and the other component. For example, the processing component 1002 includes a multi-media module for the interaction between the multi-media component 1008 and the processing component 1002.

The memory 1004 is configured to store therein various types of data to support the operation of the UE 1000. Examples of such data include instructions for any application or method operated on the UE 1000, contact data, phonebook data, messages, pictures, video, etc. The memory 1004 may be implemented in the form of any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic disk, or an optical disk.

The power source component 1006 provides power to various components of the UE 1000. The power source component 1006 may include a power management system, one or more power sources, and any other components associated with the generation, management and distribution of power in the UE 1000.

The multi-media component 1008 includes a screen for providing an output interface between the UE 1000 and a user. In some embodiments of the present disclosure, the screen may include a Liquid Crystal Display (LCD) and a Touch Panel (TP). When the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of time and a pressure associated with the touch or swipe action. In some embodiments of the present disclosure, the multi-media component 1008 includes a front-facing camera and/or a rear-facing camera. When the UE 1000 is in an operating mode, such as a shooting mode or a video mode, the front-facing camera and/or the rear-facing camera may receive external multi-media data. Each of the front-facing camera and the rear-facing camera may be a fixed optical lens system or has focal length and optical zoom capability.

The audio component 1010 is configured to output and/or input audio signals. For example, the audio component 1010 includes a microphone (MIC) configured to receive an external audio signal when the UE 1000 is in an operating mode, such as a call mode, a recording mode, and a voice recognition mode. The received audio signal may be further stored in the memory 1004 or transmitted via the communication component 1016. In some embodiments of the present disclosure, the audio component 1010 further includes a speaker to output audio signals.

The I/O interface 1012 provides an interface between the processing component 1002 and peripheral interface modules, such as a keyboard, a click wheel, buttons, and the like. The buttons may include, but not limited to, a home button, a volume button, a starting button, and a locking button.

The sensor component 1013 includes one or more sensors to provide status assessments about various aspects of the UE 1000. For example, the sensor component 1013 may detect an open/closed status of the UE 1000, relative positioning of components, e.g., the display and the keypad, of the UE 1000, a change in a position of the UE 1000 or an component of the UE 1000, a presence or absence of user contact with the UE 1000, an orientation or an acceleration/deceleration of the UE 1000, and a change in a temperature of the UE 1000. The sensor component 1013 may include a proximity sensor configured to detect the presence of nearby objects without any physical contact. The sensor component 1013 may also include a light sensor, such as a Complementary Metal Oxide Semiconductor (CMOS) or Charge-Coupled Device (CCD) image sensor, for use in imaging applications. In some embodiments of the present disclosure, the sensor component 1013 may also include an accelerometer sensor, a gyroscope sensor, a magnetic sensor, a pressure sensor, or a temperature sensor.

The communication component 1016 is configured to facilitate wired or wireless communication between the UE 1000 and other devices. The UE 1000 may access a wireless network based on a communication standard, such as Wi-Fi, 2G or 3G, or a combination thereof. In an exemplary embodiment of the present disclosure, the communication component 1016 receives a broadcast signal or broadcast associated information from an external broadcast management system via a broadcast channel. In an exemplary embodiment of the present disclosure, the communication component 1016 further includes a Near Field Communication (NFC) module to facilitate short-range communication. For example, the NFC module may be implemented based on an RF Identification (RFID) technology, an Infrared Data Association (IrDA) technology, an Ultra-Wide Band (UWB) technology, a Blue Tooth (BT) technology, and other technologies.

In an exemplary embodiment of the present disclosure, the UE 1000 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above-mentioned method.

FIG. 11 is a block diagram of a network device 1100 according to an embodiment of the present disclosure. For example, the network device 1100 is provided as a network device. As shown in FIG. 11, the network device 1100 includes a processing component 1111, which further includes at least one processor and memory resources represented by a memory 1132 for storing therein instructions to be executed by the processing component 1122, e.g., applications. The applications stored in the memory 1132 may include one or more modules each corresponding to one group of instructions. In addition, the processing component 1110 is configured to execute the instructions, so as to implement any method for the network device, e.g., the method in FIG. 1.

The network device 1100 further includes a power source component 1126 configured to performed power management over the network device 1100, a wired or wireless network interface 1150 configured to couple the network device 1100 to a network, and an input/output (I/O) interface 1158. The network device 1100 may be based on an operating system stored in the memory 1132, e.g., Windows Server TM, Mac OS XTM, Unix TM, Linux TM, Free BSDTM, or the like.

In the above-mentioned embodiments of the present disclosure, the methods have been described from the perspectives of the network device and the UE. In order to achieve various functions in the embodiments of the present disclosure, each of the network device and the UE includes a hardware structure and a software module, i.e., the functions are achieved in the form of the hardware structure, the software module, or the combination thereof. A certain function in these functions is executed through the hardware structure, the software module, or the combination thereof.

In the above-mentioned embodiments of the present disclosure, the methods have been described from the perspectives of the network device and the UE. In order to achieve various functions in the embodiments of the present disclosure, each of the network device and the UE includes a hardware structure and a software module, i.e., the functions are achieved in the form of the hardware structure, the software module, or the combination thereof. A certain function in these functions is executed through the hardware structure, the software module, or the combination thereof.

The present disclosure further provides in some embodiments a communication apparatus, which includes a transceiver module and a processing module. The transceiver module includes a transmission module and/or a reception module, the transmission module is configured to achieve a transmission function, the reception module is configured to achieve a reception function, and the transceiver module is configured to achieve the transmission function and/or the reception function.

The communication apparatus may be a terminal device (e.g., the terminal device mentioned hereinabove), an apparatus in the terminal device, or an apparatus capable of being used in combination with the terminal device. Alternatively, the communication apparatus may be a network device, an apparatus in the network device, or an apparatus capable of being used in combination with the network device.

The present disclosure further provides in some embodiments another communication apparatus. The communication apparatus may be a network device, a terminal device (e.g., the terminal device mentioned hereinabove), or a chip, a chip system or a processor which supports the network device to achieve the above-mentioned method, or a chip, a chip system or a processor which supports the terminal device to achieve the above-mentioned method. The apparatus is used to achieve the above-mentioned method, which will not be particularly defined herein.

The communication apparatus may include one or more processors. The processor may be a general-purpose processor or special-purpose processor, e.g., a baseband processor or a Central Processing Unit (CPU). The baseband processor is configured to process a communication protocol as well as communication data, and the CPU is configured to control the communication apparatus (e.g., a network device, a baseband chip, a terminal device, a terminal device chip, a Distributed Unit (DU) or a Centralized Unit (CU)), execute a computer program, and process data in the computer program.

Optionally, the communication apparatus further includes one or more memories storing therein a computer program. The computer program is executed by the processor, so that the communication apparatus executes the above-mentioned method. Optionally, the memory further stores therein data. The communication apparatus is arranged independent of, or integrated with, the memory.

Optionally, the communication apparatus further includes a transceiver and an antenna. The transceiver is also called as a transceiver unit, a transceiver machine or a transceiver circuit, and it is configured to achieve a transmission function and a reception function. The transceiver includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the communication apparatus further includes one or more interface circuits. The interface circuit is configured to receive a code instruction and transmit it to the processor. The processor executes the code instruction, so that the communication apparatus implements the above-mentioned method.

The communication apparatus is a terminal device (e.g., the terminal device mentioned hereinabove), and the processor is configured to execute the method in FIGS. 1 to 7.

The communication apparatus is a network device, and the transceiver is configured to execute the method in FIGS. 8 to 11.

Optionally, the processor may include a transceiver for achieving a reception function and a transmission function. For example, the transceiver is a transceiver circuit, an interface, or an interface circuit. The transceiver circuit, the interface or the interface circuit for achieving the reception function and the transmission function may be arranged separately, or integrated with each other. The transceiver circuit, the interface or the interface circuit is configured to read and write codes/data, or transmit/or transfer signals.

Optionally, the processor stores therein a computer program, and the computer program is executed by the processor, so that the communication apparatus implements the above-mentioned method. The computer program may be programmed in the processor, and in this case, the processor may be implemented through hardware.

Optionally, the communication apparatus includes a circuit for implementing the above-mentioned transmission, reception or communication function. The processor and the transceiver described in the embodiments of the present disclosure may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus mentioned hereinabove may be a network device or a terminal device (e.g., the terminal device mentioned hereinabove), but the scope of the communication apparatus is not limited thereto. In addition, a structure of the communication apparatus will not be particularly defined herein. The communication apparatus may be an independent device, or a part of a large device. For example, the communication apparatus may be: (1) an independent IC, chip, chip system or chip sub-system; (2) a set of one or more ICs, optionally, the IC set also includes a memory member for storing therein data and a computer program; (3) an ASIC, e.g., a Modem; (4) a module capable of being embedded into the other device; (5) a receiver, a terminal device, a smart terminal device, a cellular phone, a wireless device, a handheld device, a mobile unit, a vehicle-mounted device, a network device, a cloud device, an artificial intelligence device, etc.; or (6) the other device.

In a case that the communication apparatus is a chip or a chip system, the chip includes a processor and an interface. There may exist one or more processors, and one or more interfaces.

Optionally, the chip further includes a memory for storing therein necessary computer programs and data.

It should be appreciated that, various illustrative logical blocks and steps listed in the embodiments of the present disclosure may be implemented through electronic hardware, computer software, or a combination thereof. Whether these functions are implemented through hardware or software depends on design requirements on an entire system and specific applications. For each specific application, various methods are used to achieve the function, which however shall not be construed as going beyond the scope of the present disclosure.

The present disclosure further provides in some embodiments a system for determining a sidelink duration. The system includes the communication apparatus serving as a terminal device (e.g., the first terminal device mentioned hereinabove) and the communication apparatus serving as a network device, or includes the communication apparatus serving as a terminal device (e.g., the first terminal device mentioned hereinabove) and the communication apparatus serving as a network device.

The present disclosure further provides in some embodiments a readable storage medium storing therein instructions. The instructions are executed by a computer so as to achieve the functions in any of the above-mentioned method embodiments.

The present disclosure further provides in some embodiments a computer program product. The computer program product is executed by a computer so as to achieve the functions in any of the above-mentioned method embodiments.

In the above-mentioned embodiments of the present disclosure, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the present disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a co-axial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, such words as "first" and "second" are used to differentiate the items from each other, but shall not be construed as limiting the scope of the present disclosure or indicating any sequence.

The expression "at least one" is used to indicate one or more, e.g., two, three, four or more, which will not be particularly defined herein. In the embodiments of the present disclosure, for technical features of the same kind, the words "first", "second", "third", "A", "B", "C" and "D" are used to differentiate these technical features, without indicating any sequence or sizes thereof.

Other embodiments of the present disclosure will be apparent to those skilled in the art from consideration of the specification and practice of the present disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the appended claims.

It should be appreciated that, the present disclosure is not limited to the exact construction that has been described hereinabove and illustrated in the accompanying drawings, and that various modifications and changes can be made without departing from the scope thereof. It is intended that the scope of the present disclosure only be limited by the appended claims.

## Claims

1. A cell activation method, performed by a user equipment (UE), comprising:
obtaining information for mobility management configured by a network device; and
configuring or updating information for cell group activation based on the information for mobility management.

2. The method of claim 1, wherein the information for cell group activation comprises at least one configuration item for cell group activation, and each configuration item in the at least one configuration item is used to activate one or more cell groups,
wherein the configuration item for cell group activation comprises one or more of a configuration identity (ID), an activation condition for cell group activation, condition identification information corresponding to the activation condition, or configuration information about a to-be-activated cell group.

3. The method of claim 2, wherein the information for mobility management comprises at least one of addition information for adding the configuration item, deletion information for deleting the configuration item, modification information for modifying the configuration item, or addition/modification information for adding/modifying the configuration item,
wherein each of the addition information, the deletion information, the modification information and the addition/modification information comprises an entry for indicating at least one of the configuration ID, a triggering condition of a mobility management operation, or configuration information about a cell group corresponding to the mobility management operation.

4. The method of claim 3, wherein obtaining the information for mobility management configured by the network device comprises:
obtaining information configured by the network device and independently used for cell group activation.

5. The method of claim 3, wherein obtaining the information for mobility management configured by the network device comprises:
obtaining information for at least one mobility management operation configured by the network device.

6. The method of claim 5, further comprising:
determining indication information, wherein the indication information is used to explicitly or implicitly indicate whether or not the entry in the information for mobility management is used for one or more mobility management operations in the at least one mobility management operation.

7. The method of claim 5 or 6, further comprising:
determining indication information, wherein the indication information is used to explicitly or implicitly indicate whether or not the entry in the information for mobility management is used for cell group activation.

8. The method of claim 7, wherein determining the indication information comprises:
obtaining indication information transmitted by the network device, the indication information comprising a configuration ID corresponding to at least one entry in the information for mobility management, the indication information being used to explicitly indicate whether or not the entry in the information for mobility management corresponding to the configuration ID in the indication information is used for cell group activation; and/or
obtaining indication information in an entry in the information for mobility management, the indication information being used to explicitly indicate whether or not the entry is used for cell group activation.

9. The method of claim 7, wherein determining the indication information comprises:
obtaining indication information transmitted by the network device, the indication information comprising a configuration ID corresponding to at least one entry in the information for mobility management, the indication information being used to explicitly indicate that the entry in the information for mobility management corresponding to the configuration ID in the indication information is capable of being used for cell group activation; and/or
obtaining indication information in an entry in the information for mobility management, the indication information being used to explicitly indicate that the entry is capable of being used for cell group activation.

10. The method of claim 7, wherein determining the indication information comprises:
in response to determining that information comprised in the entry in the information for mobility management comprises information specific for cell group activation, determining the information specific for cell group activation as the indication information, wherein the indication information is used to implicitly indicate that the entry is used for cell group activation.

11. The method of claim 5, further comprising:
determining indication information, wherein the indication information is used to explicitly or implicitly indicate whether or not the information for mobility management is used for one or more mobility management operations in the at least one mobility management operation.

12. The method of claim 11, further comprising:
determining indication information, wherein the indication information is used to explicitly or implicitly indicate whether or not the information for mobility management is used for cell group activation.

13. The method of claim 2, wherein updating the information for cell group activation based on the information for mobility management comprises at least one of:
performing an addition operation on the information for cell group activation based on the addition information;
performing a deletion operation on the information for cell group activation based on the deletion information;
performing a modification operation on the information for cell group activation based on the modification information; or
performing an addition/modification operation on the information for cell group activation based on the addition/modification information.

14. The method of claim 13, wherein the information for cell group activation comprises at least one of:
configuration information for master cell group activation, used for activating a master cell group;
configuration information for secondary cell group activation, used for activating a secondary cell group; or
configuration information for master cell group activation and secondary cell group activation, used for activating the master cell group and the secondary cell group simultaneously, or activating the master cell group or the secondary cell group.

15. The method of claim 13, wherein the addition operation comprises:
in response to determining that the addition information is used for updating the information for cell group activation, adding each entry in the addition information into the information for cell group activation.

16. The method of claim 13, wherein the deletion operation comprises:
in response to determining that the deletion information is used for updating the information for cell group activation, deleting a configuration item for cell group activation in the information for cell group activation corresponding to a configuration ID comprised in each entry in the deletion information.

17. The method of claim 13, wherein the modification operation comprises:
in response to determining that the modification information is used for updating the information for cell group activation, modifying a configuration item for cell group activation in the information for cell group activation corresponding to a configuration ID comprised in each entry in the modification information.

18. The method of claim 13, wherein the addition/modification operation comprises:
in response to determining that the addition/modification information is used for updating the information for cell group activation: in a case that a configuration ID corresponding to any configuration item for cell group activation in the information for cell group activation is a configuration ID comprised in an entry in the addition/modification information, modifying the configuration item for cell group activation in the information for cell group activation corresponding to the configuration ID comprised in the entry in the addition/modification information; and
in a case that the configuration ID corresponding to any configuration item for cell group activation in the information for cell group activation is not a configuration ID comprised in an entry in the addition/modification information, adding the entry in the addition/modification information into the information for cell group activation.

19. The method of claim 2, further comprising:
performing cell group activation based on the information for cell group activation.

20. The method of claim 19, wherein performing cell group activation based on the information for cell group activation comprises:
determining whether or not a corresponding cell group meets an activation condition based on the information for cell group activation; and
in response to determining that the corresponding cell group has met the activation condition, activating the corresponding cell group.

21. A cell activation method, performed by a network device, comprising:
configuring information for mobility management for a user equipment (UE).

22. The method of claim 21, wherein the information for mobility management comprises at least one of addition information for adding a configuration item, deletion information for deleting a configuration item, modification information for modifying a configuration item, or addition/modification information for adding/modifying a configuration item,
wherein each of the addition information, the deletion information, the modification information and the addition/modification information comprises an entry for indicating at least one of a configuration ID, a triggering condition of a mobility management operation, or configuration information about a cell group corresponding to the mobility management operation.

23. The method of claim 22, wherein configuring the information for mobility management for the UE comprises:
configuring information independently used for cell group activation for the UE.

24. The method of claim 22, wherein configuring the information for mobility management for the UE comprises:
configuring information for at least one mobility management operation for the UE.

25. The method of claim 24, further comprising:
transmitting indication information to the UE, wherein the indication information is used to explicitly or implicitly indicate whether or not the entry in the information for mobility management is used for one or more mobility management operations in the at least one mobility management operation.

26. The method of claim 25, further comprising:
transmitting indication information to the UE, wherein the indication information is used to explicitly or implicitly indicate whether or not the entry in the information for mobility management is used for cell group activation.

27. The method of claim 26, wherein the indication information comprises a configuration ID corresponding to at least one entry in the information for mobility management, and the indication information is used to explicitly indicate whether or not the entry in the information for mobility management corresponding to the configuration ID in the indication information is used for cell group activation; and/or
the indication information is comprised in an entry in the information for mobility management, and the indication information is used to explicitly indicate whether or not the entry is used for cell group activation.

28. The method of claim 26, wherein the indication information comprises a configuration ID corresponding to at least one entry in the information for mobility management, and the indication information is used to explicitly indicate whether or not the entry in the information for mobility management corresponding to the configuration ID in the indication information is capable of being used for cell group activation; and/or
the indication information is comprised in an entry in the information for mobility management, and the indication information is used to explicitly indicate whether or not the entry is capable of being used for cell group activation.

29. The method of claim 26, further comprising:
transmitting indication information to the UE, wherein the indication information is used to explicitly or implicitly indicate whether or not the information for mobility management is used for one or more mobility management operations in the at least one mobility management operation.

30. The method of claim 26, further comprising:
transmitting indication information to the UE, wherein the indication information is used to explicitly or implicitly indicate whether or not the information for mobility management is used for cell group activation.

31. The method of claim 26, wherein the information for mobility management comprises information specific for cell group activation.

32. A cell activation apparatus, comprising:
an obtaining module configured to obtain information for mobility management configured by a network device; and
a configuration and updating module configured to configure or update information for cell group activation based on the information for mobility management.

33. A cell activation apparatus, comprising:
a configuration module configured to configure information for mobility management for a UE.

34. A communication apparatus, comprising a processor and a memory storing therein a computer program, wherein the processor is configured to execute the computer program in the memory, so as to implement the cell activation method of any one of claims 1 to 20.

35. A communication apparatus, comprising a processor and a memory storing therein a computer program, wherein the processor is configured to execute the computer program in the memory, so as to implement the cell activation method of any one of claims 21 to 31.

36. A communication apparatus, comprising a processor and an interface circuit, wherein the interface circuit is configured to receive a code instruction and transmit the code instruction to the processor, and the processor is configured to execute the code instruction so as to implement the cell activation method of any one of claims 1 to 20.

37. A communication apparatus, comprising a processor and an interface circuit, wherein the interface circuit is configured to receive a code instruction and transmit the code instruction to the processor, and the processor is configured to execute the code instruction so as to implement the cell activation method of any one of claims 21 to 31.

38. A computer-readable storage medium storing therein an instruction, wherein the instruction is executed so as to implement the cell activation method of any one of claims 1 to 20.

39. A computer-readable storage medium storing therein an instruction, wherein the instruction is executed so as to implement the cell activation method of any one of claims 21 to 31.
